# EUROPÄISCHE PATENTSCHRIFT

(11) **EP 4 444 536 B1**
(45) Veröffentlichungstag und Bekanntmachung des Hinweises auf die Patenterteilung: **11.02.2026**
(21) Anmeldenummer: 22829689.3
(22) Anmeldetag: 08.12.2022
(51) Int. Cl.: B29D 30/00, G01M 17/02, G01B 11/24, G01B 7/28, G01B 21/18, G01B 21/08

(54) **VERFAHREN ZUR ERMITTLUNG VON ABWEICHUNGEN DER WULSTKERN- ZU- WULSTKERN- LÄNGE DER KARKASSE EINES ROHEN REIFENS ODER EINES VULKANISIERTEN REIFENS UND ZUGEHÖRIGE MESSANORDNUNG**
METHOD FOR DETERMINING DEVIATIONS IN THE BEAD-CORE-TO-BEAD-CORE LENGTH OF THE CARCASS OF A RAW TYRE OR OF A VULCANISED TYRE, AND ASSOCIATED MEASUREMENT ARRANGEMENT
PROCÉDÉ DE DÉTERMINATION D'ÉCARTS DANS LA LONGUEUR DE TRINGLE DE TALON À TRINGLE DE TALON DE LA CARCASSE D'UN PNEU BRUT OU D'UN PNEU VULCANISÉ, ET AGENCEMENT DE MESURE ASSOCIÉ

(30) Priorität: 09.12.2021 DE 102021214038
(43) Veröffentlichungstag der Anmeldung: 16.10.2024
(73) Patentinhaber: Continental Reifen Deutschland GmbH, 30175 Hannover (DE)
(72) Erfinder: LEDERHOFER, Raymund, 30175 Hannover (DE); SCHUBERTH, Martin, 30175 Hannover (DE)
(74) Vertreter: Continental Corporation
(86) Internationale Anmeldenummer: PCT/DE2022/200294
(87) Internationale Veröffentlichungsnummer: WO 2023/104260

(56) Entgegenhaltungen:
- WO-A1-2018/116031
- CN-A- 108 454 144
- DE-A1- 102014 012 095
- DE-A1- 102020 206 680
- DE-A1- 19 649 506
- DE-A1- 2 114 551

## Beschreibung

Die Erfindung betrifft ein Verfahren zur indirekten Vermessung von Abweichungen der Wulstkern- zu- Wulstkern- Länge einer textile Festigkeitsträger enthaltenden Karkasse eines rohen Reifens oder eines vulkanisierten Reifens mit einem mit Festigkeitsträgern aus Stahl verstärkten Gürtelpaket und einem Laufstreifen, wobei der Reifen auf einer Vorrichtung, mittels welcher der Reifen um die Reifenachse in eine insbesondere gleichförmige Drehbewegung versetzbar ist, positioniert ist oder wird,
zumindest ein Sensor in einer definierten und fixen Lage in einem Abstand vor der Peripherie des Laufstreifens des Reifens positioniert wird,
und während der Reifen in eine insbesondere gleichförmige Drehung versetzt wird, die Abstände des Gürtelpaketes zum Sensor gemessen und aufgezeichnet werden.

Aus der DE 10 2014 012 095 A1 ist eine Messanordnung und ein Verfahren zum Prüfen eines Fahrzeugreifens bekannt. Die Messanordnung umfasst eine Strahlungsquelle für elektromagnetische Strahlung und eine Empfangseinrichtung, also einen Sensor, zum Empfangen der vom Reifen reflektierten Strahlung. Der Reifen weist einen Laufstreifen und ein Gürtelpaket mit metallischen Festigkeitsträgern auf, wobei das Gürtelpaket einen Spiegel für die Strahlung bildet. Gemäß einer Ausführungsform befinden sich die Strahlungsquelle und die Empfangseinrichtung an der dem Reifeninnenraum abgewandten Seite des Fahrzeugreifens im Bereich neben dem Laufstreifen. Alternativ können die Strahlungsquelle und die Empfangseinrichtung an verschiedenen Seiten des Gürtelpaketes angeordnet sein, sodass die durch das Gürtelpaket hindurchdringende Strahlung gemessen wird. Beim Verfahren wird von der Strahlungsquelle elektromagnetische Strahlung im THz-Frequenzbereich in Form eines Strahlungsimpulses abgestrahlt, wobei der Strahlungsimpuls am Gürtelpaket reflektiert und von der Empfangseinrichtung zeitlich verzögert in einer abgeschwächten Amplitude detektiert wird, wodurch auf Eigenschaften des Reifens geschlossen werden kann. Folglich können die Abstände des Gürtelpaketes zum Sensor ermittelt werden. Der Reifen kann gegenüber der Strahlungsquelle beweglich sein, wobei als Bewegungsvorrichtungen Drehachsen, Achssysteme und/oder Roboter geeignet sind, sodass der Reifen während des Verfahrens in eine Drehbewegung versetzt werden kann. Die Messanordnung gestattet ein zerstörungsfreies Verfahren und soll kostengünstig sein, wobei unter anderem Fehlstellen im Laufstreifen, der Abstand zwischen den Karkassfäden, unterschiedliche Gummimaterialien, die Lage und/oder die Stärke von Gummimaterialien und metallischen Bestandteilen sowie der Gürtelhöhenschlag und damit indirekt Abweichungen der Wulstkern- zu- Wulstkern- Länge ermittelt werden können.

Aus der DE 21 14 551 A1 ist eine Messanordnung und ein Verfahren zur Ermittlung der Lage des Gürtelpaketes eines Fahrzeugluftreifens bekannt. Die Messanordnung umfasst zwei ortsfeste Suchköpfe mit je einem elektrischen Schwingkreis, der mit einer Elektronenröhre, einer Gitterspule und einem Anodenstrommessgerät verbunden ist. Die Suchköpfe bilden je einen Hochfrequenzgenerator, der in einer Frequenz von 20 KHz bis 100 KHz schwingt, sodass jeder Suchkopf ein induktiver Sensor ist. Zur Vermessung wird der Fahrzeugreifen auf eine Felge aufgezogen, nachfolgend auf drehbar gelagerte Weise an der Messanordnung angebracht und an dieser vorbeibewegt, wobei die Suchköpfe zu den Reifenschultern weisen. Die am Anodenstrommessgerät registrierte Anzeige ist von der Lage des Gürtelpaktes abhängig, wobei sich bei einer von der vorgesehenen, zentrischen Lage abweichenden Lage die Frequenz von einem der beiden Schwingkreise der Suchköpfe stärker ändert als jene des Anderen. Das Anodenstromessgerät zeigt somit an, ob und in welchem Ausmaß das Gürtelpaket von seiner vorgeschriebenen Lage abweicht. Im Bereich jeder Reifenschulter sind vier gegeneinander versetzte Suchköpfe vorgesehen, welche einen Messbereich für die die Lage der Gürtelkanten festlegen, wobei die Position der Suchköpfe derart ist, dass bei einer vorschriftsmäßigen Lage des Gürtelpaketes eine definierte Anzahl der Suchköpfe zur Anzeige kommt. Die Messanordnung und das zugehörige Verfahren gestatten eine zerstörungsfreie Prüfung der Position der Gürtellagen.

Die DE 196 49 506 A1 offenbart eine Sensoreinrichtung für an einer Fahrzeugachse befestigte Fahrzeugräder zum Ermitteln und/oder Überwachen der Profiltiefe, der Reifentemperatur und/oder der Drehzahl. Die Sensoreinrichtung umfasst einen Halter mit einem dem Laufstreifen des Fahrzugreifens zugewandten Sensor und einer Auswertelektronik. Der Halter ist relativ zum Fahrzeugrad beweglich, an seinem einem Ende mit dem Radkasten oder mit der Fahrzeugachse verbunden und liegt mit seinem anderen Ende, an welchem sich der Sensor befindet, schleifend am Laufstreifen auf. Zur Ermittlung der Profiltiefe ist der Sensor als elektrische Spule ausgebildet, die Teil eines Schwingkreises ist, dessen Induktivität durch die im Metall des Gürtelpaktes auftretenden Wirbelstürme verändert wird, wodurch ein Rückschluss auf den Reifenverschleiß bzw. die Restprofiltiefe möglich ist. Mittels eins Distanzstücks wird der Abstand von der Spule des Sensors zum Gürtelpaket vergrößert, sodass der Sensor erst dann anspricht, wenn die vorgegebene Restprofiltiefe erreicht ist. Der Sensor kann einen Temperaturfühler zur Ermittlung der Reifentemperatur, einen Impulssensor zum Kilometerzählen, ein Feuchtigkeitssensorelement zur Messung der Feuchtigkeit auf der Reifenoberfläche, ein Drucksensorelement und/oder ein Abstandssensorelement umfassen. Die Sensoreinrichtung soll die für die Sicherheit des Reifens erheblichen Parameter auf zuverlässige Weise ermitteln.

Aus der DE 196 08 528 A1 ist ein Verfahren zur Ermittlung von Unregelmäßigkeiten in der Struktur der Anordnung von Festigkeitsträgern in dehnbaren Bereichen eines Fahrzeugluftreifens, daher den Reifenseitenwänden, durch Messung der Kontur der Reifenoberfläche in einer von mehreren benachbarten Positionen im zu überprüfbaren Bereich bekannt. Dabei wird der Reifen auf einer Vorrichtung positioniert, in eine gleichförmige Drehung versetzt und es wird zunächst in einem ersten Messdurchgang bei einem bestimmten Innendruck und einem außerhalb des Reifens eingestellten Außenluftdruck die Seitenwandkontur in vorgegebenen Messpositionen des Reifens gemessen, anschließend wird in einem zweiten Messdurchgang bei verändertem Innenluftdruck oder Außenluftdruck, wobei der andere der beiden Drücke unverändert konstant bleibt, ebenfalls die Kontur an den Messpositionen der Oberfläche des Reifens gemessen. Aus den Differenzwerten kann für jede Messposition die erfolgte Dehnung der Festigkeitsträger ermittelt werden und daraus eine etwaige Position von Unregelmäßigkeiten im Dehnverhalten der Festigkeitsträger abgeleitet werden.

Es ist bekannt, dass Ungenauigkeiten, die während des Bauprozesses von Reifen auftreten, zu unerwünscht erhöhten Geometrie- und Kraftschwankungen des fertig vulkanisierten Reifens in radialer Richtung führen können. Als Folge davon können Vibrationen im Fahrwerk der Fahrzeuge entstehen, auf welchen solche Reifen montiert sind. Eine häufige Ursache von Vibrationen verursachenden Kraftschwankungen sind Abweichungen der Wulstkern- zu- Wulstkern- Länge der Reifenkarkasse von der erwünschten weitgehend konstanten Länge über den Umfang des Reifens und ggf. auch Schwankungen der Laufstreifendicke über den Umfang des Reifens.

Eine nach dem Aufbau des Reifens am Reifenrohling oder am fertig vulkanisierten Reifen durchgeführte Überprüfung der erwähnten Ungenauigkeiten bzw. deren Ursachen ist zeitaufwendig und erfordert meist die Zerstörung des Reifens, um entsprechende Messungen durchführen zu können. Des Weiteren ist derzeit eine Messung unmittelbar nach dem Aufbauprozess, etwa des Reifenrohlings auf der zweiten Stufe, der Bombiermaschine, beim üblichen zweistufigen Aufbau von PKW-Reifen und somit ein frühzeitiger Eingriff in nicht ordnungsgemäß ablaufende Fertigungsprozesse nicht möglich.

Zusammenfassend wird daher festgehalten, dass ein Feststellen von Abweichungen der Wulstkern- zu- Wulstkern- Länge der Reifenkarkasse als Ursache von Fahrwerk-Vibrationen derzeit zeitaufwendig und kostenintensiv ist und beispielsweise mit computertomographischen Untersuchungen, Röntgenanalysen und Vermessung von Reifenabschnitten verbunden ist. In letzterem Fall ist eine Zerstörung des Reifens erforderlich. Unter den Einsatzbedingungen des Reifens, also bei unter Innendruck und montiertem Reifen, ist eine derartige Prüfung derzeit nicht möglich. Auch eine entsprechende Messung während des Reifenaufbauprozesses, also am Reifenrohling, ist derzeit zerstörungsfrei nicht möglich.

Der Erfindung liegt somit die Aufgabe zugrunde, ein Verfahren und eine Messanordnung zur Verfügung zu stellen, mit welchen an einem Reifenrohling oder an einem fertig vulkanisierten, auf einer Felge montierten und unter Innendruck gesetzten Reifen auf eine zerstörungsfreie Weise Abweichungen der Wulstkern-zu-Wulstkern- Länge der Reifenkarkasse von der erwünschten konstanten Länge bzw. den Toleranzen dieser Länge über den Umfang des Reifens feststellbar sind.

Gelöst wird die gestellte Aufgabe erfindungsgemäß mit einem Verfahren, bei welchem als Sensor ein induktiver Sensor verwendet wird, wobei die Abstände des Gürtelpaketes zum induktiven Sensor über mindestens eine komplette Umdrehung des Reifens gemessen und aufgezeichnet werden, wobei mittels eines weiteren Sensors, beispielsweise eines Triangulationssensors, eines Laser-Scan-Mikrometers oder ein sonstiges Scan-Mikrometers, welcher insbesondere positionsgenau zum induktiven Sensor positioniert wird, über die mindestens eine komplette Umdrehung die Abstände zur Laufstreifenoberfläche gemessen und aufgezeichnet werden, wobei aus den Abstandsdaten des weiteren Sensors und des induktiven Sensors die Laufstreifendicke und deren Schwankung über den Reifenumfang ermittelt werden.

Die Messanordnung gemäß der Erfindung ist gekennzeichnet durch
einen induktiven Sensor, welcher während der Drehung des Reifens die Abstände zum Gürtelpaket misst, und
einen weiteren Sensor, beispielsweise einen Triangulationssensor, ein Laser-Scan-Mikrometer oder ein sonstiges Scan-Mikrometer, wobei der weitere Sensor insbesondere positionsgenau zum induktiven Sensor positionierbar ist und während einer Drehung des Reifens die Abstände zur Laufstreifenoberfläche misst.

Mit dem erfindungsgemäßen Verfahren und der erfindungsgemäßen Messanordnung wird daher der Gürtelhöhenschlag über den Reifenumfang ermittelt. Ausmaß und Schwankungen des Gürtelhöhenschlages über den Reifenumfang gestatten Rückschlüsse auf Unregelmäßigkeiten in der Karkasslänge zwischen den beiden Wulstkernen, da die Karkasse mit dem Gürtelpakets fest verbunden ist und an den Wulstkernen festgeklemmt ist. Unregelmäßigkeiten, beispielsweise beim Kernsetzverfahren beim Bau des Reifens, die zu Unterschieden der Wulstkern- zu- Wulstkern- Länge führen können, haben Schwankungen des Gürtelhöhenschlages über den Reifenumfang zur Folge. Erhöhte Gürtelhöhenschläge sind ursächlich durch eine etwas größere Länge der Karkasse, der Wulstkern- zu Wulstkern- Länge, bedingt. Überschreiten Schwankungen des Gürtelhöhenschlages bestimmte Werte, so ist mit dem Auftreten von unerwünschten Fahrwerk-Vibrationen beim Betrieb der Reifen auf einem Fahrzeug zu rechnen und es wurden derartige Vibrationen auch nachgewiesen.

Bei einer bevorzugten Ausführung der Erfindung wird der induktive Sensor in einem Abstand von einigen Millimetern, insbesondere von 5,00 mm bis 15,00 mm, vor der Laufstreifenperipherie des Reifens positioniert. Auf diese Weise lassen sich mit induktiven Sensoren besonders exakte Messungen durchführen.

Wird das Verfahren mit einem vulkanisierten Reifen durchgeführt, so wird dieser auf einer Felge montiert, unter Innendruck gesetzt und anschließend auf der Vorrichtung, mittels welcher der Reifen um die Reifenachse in eine insbesondere gleichförmige Drehbewegung versetzbar ist, positioniert. Dabei kann vorteilhafterweise eine der bereits vorhandenen Vorrichtungen verwendet werden, insbesondere eine Unwuchtmessmaschine oder eine Reifengleichförmigkeitsmessmaschine.

Das Verfahren eignet sich auch in besonders vorteilhafter Weise zur Messung des Gürtelhöhenschlages eines Rohreifens. Wird der rohe Reifen auf einer zweistufigen Reifenaufbaumaschine aufgebaut, so kann die Messung auf der Bombiermaschine, der zweiten Stufe einer zweistufigen Reifenaufbaumaschine, nach dem Abschluss des Aufbauprozess des Rohreifens durchgeführt werden.

Erfolgt diese Messung bei einem fertig vulkanisierten Reifen so können die Elemente der Profilierung des Laufstreifens rechnerisch ausgefiltert werden oder zur gezielten Messung der Unterprofilstärke herangezogen werden.

Die Messanordnung ist bei einem vulkanisierten Reifen bevorzugt derart, dass der vulkanisierte Reifen auf einer Felge montiert und unter Innendruck gesetzt auf der Vorrichtung, welche den Reifen bzw. das Fahrzeugrad in Drehbewegung versetzt, angeordnet ist. Wie bereits erwähnt ist diese Vorrichtung beispielsweise eine Unwuchtmessmaschine oder eine Reifengleichförmigkeitsmessmaschine.

Bei einer vorteilhaften Messanordnung für einen rohen Reifen befindet sich dieser auf einer Bombiermaschine - der zweiten Stufe einer zweistufigen Reifenaufbaumaschine. Diese Messanordnung gestattet es, den Reifen unmittelbar nach dem Abschluss seines Aufbaus entsprechend zu vermessen und dadurch gegebenenfalls den Aufbauprozess zu kontrollieren. Es kann bei einem fertig vulkanisierten Reifen erforderlich oder zweckmäßig sein, die Elemente der Profilierung des Laufstreifens rechnerisch auszufiltern.

Weitere Merkmale, Vorteile und Einzelheiten der Erfindung werden nun anhand der schematischen Zeichnung, die Ausführungsbeispiele darstellt, näher beschrieben. Dabei zeigen
Fig. 1 ein Ausführungsbeispiel einer Messanordnung bei einem montierten und unter Innendruck gesetzten Fahrzeugluftreifen,
Fig. 2 eine Seitenansicht einer Karkasse mit einer ungleichmäßigen Wulstkern- zu-Wulstkern- Länge,
Fig. 3, Fig. 4 und Fig. 5 Diagramme mit Beispielen von Messergebnissen.

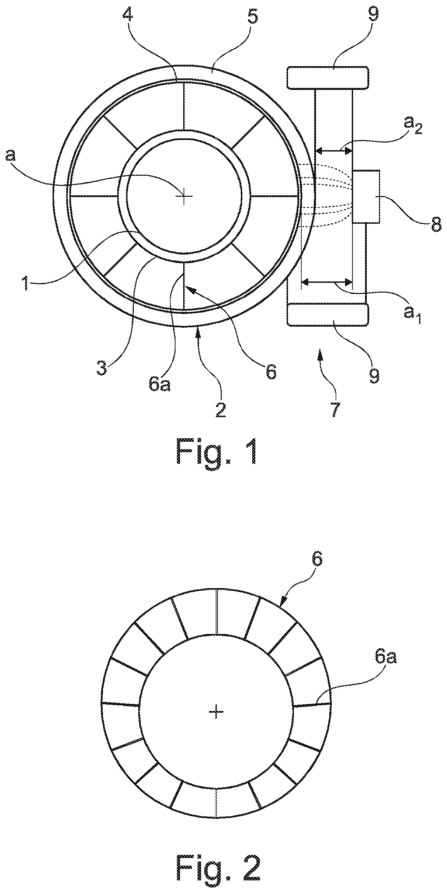

Fig. 1 zeigt schematisch eine Seitenansicht eines auf einer Felge 1 montierten Fahrzeugluftreifen 2, welcher insbesondere ein Reifen für Personenkraftwagen, SUVs, Vans oder Light-Trucks ist und welcher die üblichen Bauteile aufweist. Zu diesen Bauteilen gehören Wulstbereiche mit Wulstkernen 3, ein Gürtelpaket 4, ein Laufstreifen 5 und eine Karkasse 6, von welcher einzelne in radialer Richtung verlaufende Festigkeitsträger 6a angedeutet sind.

Das Gürtelpaket 4 besteht aus mehreren, insbesondere zwei, Gürtellagen mit in jeder Lage in ein Gummimaterial, die Gürtelgummierung, eingebetteten Stahlkorden aus mehreren Stahl-Filamenten oder eingebetteten Monofilamenten. Der Laufstreifen 5 besteht aus einem oder mehreren Gummimaterialien. Das Gürtelpaket 4 kann, wie es bei PKW-Reifen üblich ist, mit einer sogenannten Gürtelbandage bedeckt sein, welche üblicherweise aus in Gummimaterial eingebetteten und in Umfangsrichtung oder im Wesentlichen in Umfangsrichtung umlaufenden Festigkeitsträgern aus einem textilen Material, beispielsweise einem Polyamid, bestehen. Die Messanordnung und das Messverfahren berücksichtigen die Gürtelbandage bzw. deren Dicke als Teil des Laufstreifens, die Dicke der Gürtelbandage wird im Rahmen der Laufstreifendicke berücksichtigt, das heißt die Laufstreifendicke enthält auch die Dicke der Gürtelbandage.

Die bei PKW-Reifen, SUVs, Vans und Light-Trucks üblicherweise einlagig ausgeführte Karkasse 6 weist in ein Gummimaterial, die Karkassgummierung, eingebettete textile Festigkeitsträger 6a auf, die in den Seitenwänden, wie in Fig. 1 angedeutet, in radialer Richtung verlaufen. Die Karkasse 6 verläuft, an die metallischen Wulstkerne 3 geklemmt, durchgehend von Wulstkern 3 zu Wulstkern 3 und im Laufstreifenbereich daher radial innerhalb des Gürtelpaketes 4. In den Wulstbereichen ist die Karkasse 6 üblicherweise um die Wulstkerne 3 von der Reifeninnenseite her herumgeführt und endet entweder in den Seitenwandbereichen als Karkasshochschläge oder radial innerhalb der seitlichen Randbereiche des Gürtelpaketes 4. Die diesbezüglichen Ausgestaltungen sind bestens bekannt, sodass ein näheres Eingehen darauf unterbleibt.

Das aus der Felge 1 und dem unter Innendruck (Nenndruck gemäß dem E.T.R.T.O. Standards Manual in der zum Anmeldezeitpunkt der gegenständlichen Patentanmeldung geltenden Fassung) gesetzten Fahrzeugluftreifen 2 bestehende Fahrzeugrad wird auf einer Vorrichtung positioniert, die es gestattet, das Fahrzeugrad um die Reifenachse a ohne Berührung zu weiteren Objekten in eine insbesondere gleichförmige Drehung zu versetzen. Diese Vorrichtung kann eine Unwuchtmessmaschine oder eine Reifengleichförmigkeitsmessmaschine sein.

Vor dem Laufstreifen 5 des Fahrzeugluftreifens 2 wird eine Messanordnung 7 positioniert, welche einen auf einem nicht dargestellten Gestell angeordneten induktiven Sensor 8 aufweist. Die Positionierung des induktiven Sensors 8 erfolgt derart, dass die Messrichtung der an der Position des Sensors 8 vorliegenden radialen Richtung entspricht und das Messfeld zur Reifenachse a weist. Der induktive Sensor 8 befindet sich dabei in einem Abstand von einigen Millimetern, insbesondere 5,00 mm bis 15,00 mm vor der Laufstreifenperipherie. Der induktive Sensor 8 erzeugt ein Magnetfeld, durch welches der Abstand a₁ zum Gürtelpaket 4 mit den aus Stahl bestehenden Verstärkungsmaterialien gemessen wird. Der induktive Sensor arbeitet grundsätzlich mit einer Induktivität, sodass ein Magnetfeld erzeugt wird, welches in diesem Fall von den aus Stahl bestehenden Verstärkungsmaterialien im Gürtelpaket 4 verändert wird. Wenn durch Unregelmäßigkeiten beim Aufbau des Reifens ein Gürtelhöhenschlag über den Reifenumfang vorliegt, ändert sich der Abstand a₁ vom Gürtelpaket 4 zum Sensor 8 während einer Drehung des Fahrzeugrades und dabei das Magnetfeld. Eine Messung des Gürtelhöhenschlages wird daher über zumindest eine komplette, insbesondere gleichförmige 360° Drehung des Fahrzeugrades durchgeführt. Ein variierender Gürtelhöhenschlag ist üblicherweise auf Abweichungen der Wulstkern- zu- Wulstkern- Länge der mit dem Gürtelpaket 4 in Kontakt stehenden Karkasse 6 zurückzuführen, sodass über die Messung des Gürtelhöhenschlages und dessen Ausmaß eine indirekte Vermessung der Wulstkern- zu- Wulstkern - Länge und somit eine Qualitätskontrolle ermöglicht sind und mangelhafte Reifen aussortiert werden können.

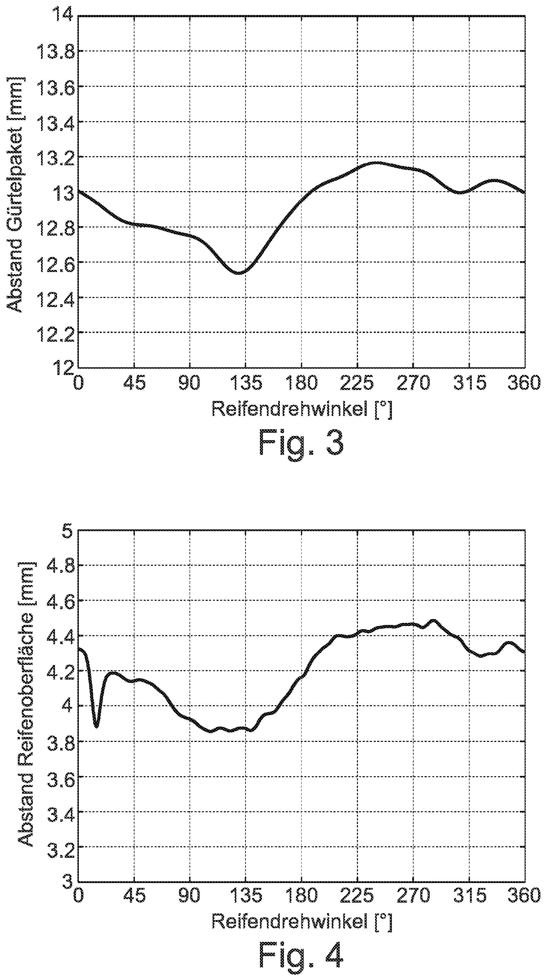

Die vom induktiven Sensor 8 ermittelten Daten werden an einen Rechner übermittelt, der die Daten mittels einer Software verarbeitet und das Ergebnis der Messung beispielsweise in einem Diagramm, wie es in Fig. 3 beispielhaft gezeigt ist, wiedergibt. In Fig. 3 ist auf der Abszisse der Reifendrehwinkel in Grad eingetragen, auf der Ordinate der jeweils gemessene Abstand a₁ des Sensors 8 zum Gürtelpaket 4 in Millimeter. Eine Vergrößerung des Abstandes a₁ bedeutet, dass in diesem Reifenbereich die Karkasse etwas länger ist als in jenen Bereichen, wo ein geringerer oder ein sich verringernder Abstand a₁ vorliegt.

Zusätzlich kann ein weiterer Sensor 9, beispielsweise ein Triangulationssensor, ein Laser-Scan-Mikrometer oder ein sonstiges Scan-Mikrometer, insbesondere positionsgenau zum induktiven Sensor 8 am Gestell angebracht werden und während der Reifendrehung über den Reifenumfang den Abstand a₂ zur Reifenoberfläche ermitteln. Werden die beiden Sensoren, der induktive Sensor 9 und der den Abstand a₁ ermittelnde Sensor 8 entsprechend positioniert, kann durch Subtraktion der Messwerte an gleichen Winkelpositionen die Laufstreifendicke über den Reifenumfang bzw. deren Schwankung über den Reifenumfang ermittelt werden. Auch bei unterschiedlichen Abständen der Sensoren 8, 9 zum Reifen kann die Laufstreifendicke auf simple Weise errechnet werden. Darüber hinaus ist auch eine gesonderte Messung des Drehwinkels des Reifens durch einen Drehgeber möglich, um eine Zuordnung der Daten der Sensoren 8 und 9 zu ermöglichen. Die Anforderung einer gleichförmigen Rotation des Reifens entfällt bei einem Drehgeber. Dabei kann der Sensor 9 die Messung entlang des Rillengrundes einer in Umfangsrichtung umlaufenden Umfangsrille durchführen, die Tiefe der Umfangsrille und etwaige Treadwearindikatoren in der Rille werden bei der Berechnung berücksichtigt. Alternativ kann der Sensor 9 an beliebiger Stelle über den Reifenumfang Messwerte ermitteln, die Profilierung des Laufstreifens wird rechnerisch ausgefiltert.

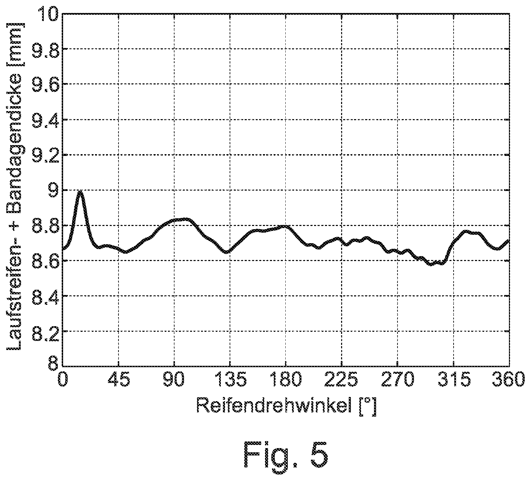

Fig. 4 zeigt anhand eines weiteren Diagrammes ein Bespiel der Auswertung der Sensordaten des Sensors 9. Auf der Abszisse ist wiederum der Reifendrehwinkel von 0° bis 360° aufgetragen, auf der Ordinate der gemessene/errechnete Abstand des Sensors 9 zur Reifenperipherie in Millimeter. Fig. 5 zeigt ein Diagramm, welches eine beispielhafte Variation der Laufstreifendicke (inklusive Bandagendicke) in Abhängigkeit vom Reifendrehwinkel im Bereich bis zu 360°, aus Messungen der Sensoren 8 und 9 über eine oder mehrere komplette Umdrehung/en, wiedergibt.

Alternativ können die beschriebenen Messungen bereits am Reifenrohling erfolgen, bei einer üblichen zweistufigen Reifenaufbaumaschine für PKW-Reifen an der zweiten Stufe, der Bombiermaschine. Bekannterweise wird an der zweiten Stufe die separat aufgebaute Reifenkarkasse, die üblicherweise aus einer Innenschicht, der Karkasseinlage, Kernpaketen und Seitenwänden besteht, mit einem Gürtel-/Laufstreifenpaket durch Hineinbombieren verbunden. Die Messungen können im Anschluss an das Bombieren des Reifenrohlings direkt auf der zweiten Stufe, der Bombiermaschine, analog wie bereits beschrieben, durchgeführt werden. Auch Messungen an einem der zweiten Stufe entnommenen Reifenrohling sind möglich, wobei der Reifenrohling auf einer in Drehung versetzbaren Vorrichtung positioniert wird und beispielsweise mittels eines in seinen Innenraum eingebrachten aufblasbaren Schlauches stabilisiert wird.

### Bezugszeichenliste

- 1: Felge
- 2: Fahrzeugluftreifen
- 3: Wulstkern
- 4,: Gürtelpaket
- 5: Laufstreifen
- 6: Karkasse
- 6a: Festigkeitsträger
- 7: Messanordnung
- 8, 9: Sensor
- a: Reifenachse
- a₁, a₂: Abstand

## Patentansprüche

1. Verfahren zur indirekten Vermessung von Abweichungen der Wulstkern- zu-Wulstkern- Länge einer textile Festigkeitsträger enthaltenden Karkasse (6) eines rohen Reifens (2) oder eines vulkanisierten Reifens mit einem mit Festigkeitsträgern aus Stahl verstärkten Gürtelpaket (4) und einem Laufstreifen (5), wobei der Reifen auf einer Vorrichtung, mittels welcher der Reifen um die Reifenachse (a) in eine insbesondere gleichförmige Drehbewegung versetzbar ist, positioniert ist oder wird,
zumindest ein Sensor (8) in einer definierten und fixen Lage in einem Abstand vor der Peripherie des Laufstreifens (5) des Reifens positioniert wird,
und während der Reifen (2) in eine insbesondere gleichförmige Drehung versetzt wird, die Abstände (a₁) des Gürtelpaketes (4) zum Sensor (8) gemessen und aufgezeichnet werden,
**dadurch gekennzeichnet,**
**dass** als Sensor (8) ein induktiver Sensor (8) verwendet wird, wobei die Abstände (a₁) des Gürtelpaketes (4) zum induktiven Sensor (8) über mindestens eine komplette Umdrehung des Reifens (2) gemessen und aufgezeichnet werden, wobei mittels eines weiteren Sensors (9), beispielsweise eines Triangulationssensors, eines Laser-Scan-Mikrometers oder ein sonstiges Scan-Mikrometers, welcher insbesondere positionsgenau zum induktiven Sensor (8) positioniert wird, über die mindestens eine komplette Umdrehung die Abstände (a₂) zur Laufstreifenoberfläche gemessen und aufgezeichnet werden, wobei aus den Abstandsdaten des weiteren Sensors (9) und des induktiven Sensors (8) die Laufstreifendicke und deren Schwankung über den Reifenumfang ermittelt werden.

2. Verfahren nach Anspruch 1, **dadurch gekennzeichnet, dass** der induktive Sensor (8) in einem Abstand von einigen Millimetern, insbesondere von 5,00 mm bis 15,00 mm, vor der Laufstreifenperipherie des Reifens (2) positioniert wird.

3. Verfahren nach Anspruch 1 oder 2, **dadurch gekennzeichnet, dass** ein vulkanisierter Reifen (2) auf einer Felge montiert wird, unter Innendruck gesetzt wird und anschließend auf der Vorrichtung, mittels welcher der Reifen (2) um die Reifenachse (a) in eine insbesondere gleichförmige Drehbewegung versetzbar ist, positioniert wird.

4. Verfahren nach einem der Ansprüche 1 bis 3, **dadurch gekennzeichnet, dass** die Vorrichtung, mittels welcher ein vulkanisierter und auf einer Felge montierter Reifen (2) in eine insbesondere gleichförmige Drehbewegung versetzt wird, eine Unwuchtmessmaschine oder eine Reifengleichförmigkeitsmessmaschine ist.

5. Verfahren nach Anspruch 1 oder 2, **dadurch gekennzeichnet, dass** bei einem rohen Reifen die Vorrichtung, mittels welcher der Reifen in eine insbesondere gleichförmige Drehbewegung versetzt wird, eine Bombiermaschine - die zweite Stufe einer zweistufigen Reifenaufbaumaschine - ist, auf welcher sich der rohe Reifen nach Abschluss seines Aufbauprozesses befindet.

6. Verfahren nach einem der Ansprüche 1 bis 5, **dadurch gekennzeichnet, dass** bei einem fertig vulkanisierten Reifen die Elemente der Profilierung des Laufstreifens rechnerisch ausgefiltert werden.

7. Messanordnung (7) zur indirekten Vermessung von Abweichungen der Wulstkern- zu Wulstkern- Länge der Karkasse (6) eines rohen Reifens (2) oder eines vulkanisierten Reifens mit einer textile Festigkeitsträgern enthaltenden Karkasse (6) und einem mit Festigkeitsträgern aus Stahl verstärkten Gürtelpaket (4), wobei die Messanordnung (7) eine Vorrichtung, auf welcher der Reifen (2) positioniert ist oder wird und mittels welcher der Reifen um die Reifenachse (a) in eine insbesondere gleichförmige Drehbewegung versetzbar ist und
zumindest einen Sensor (8), welcher in einer definierten und fixen Lage in einem Abstand vor der Peripherie des Laufstreifens des Reifens (2) positionierbar ist und während einer Drehung des Reifens (2) seine Abstände (a₁) zum Gürtelpaket (4) misst, umfasst,
**gekennzeichnet durch**
einen induktiven Sensor (8), welcher während der Drehung des Reifens die Abstände (a₁) zum Gürtelpaket (4) misst, und
einen weiteren Sensor (9), beispielsweise einen Triangulationssensor, ein Laser-Scan-Mikrometer oder ein sonstiges Scan-Mikrometer, wobei der weitere Sensor (9) insbesondere positionsgenau zum induktiven Sensor (8) positionierbar ist und während einer Drehung des Reifens die Abstände (a₂) zur Laufstreifenoberfläche misst.

8. Messanordnung (7) nach Anspruch 7, **dadurch gekennzeichnet, dass** ein vulkanisierter Reifen (2) auf einer Felge (1) montiert und unter Innendruck gesetzt ist.

9. Messanordnung (7) nach Anspruch 8, **dadurch gekennzeichnet, dass** die Vorrichtung eine Unwuchtmessmaschine oder eine Reifengleichförmigkeitsmessmaschine ist.

10. Messanordnung (7) nach Anspruch 7, **dadurch gekennzeichnet, dass** sich ein roher Reifen auf einer Bombiermaschine - der zweiten Stufe einer zweistufigen Reifenaufbaumaschine - befindet.

11. Messanordnung nach einem der Ansprüche 1 bis 10, **dadurch gekennzeichnet, dass** ein Rechner die Elemente der Profilierung des Laufstreifens (5) ausfiltert.

## Claims

1. Method for indirectly measuring deviations of the bead core to bead core length of a carcass (6), containing textile strength members, of a green tyre (2) or of a vulcanized tyre with a belt assembly, reinforced with steel strength members (4), and a tread (5), wherein the tyre has been or is positioned on a device that can be used to set the tyre in rotational motion, in particular uniform rotational motion, about the tyre axis (a),
at least one sensor (8) is positioned in a defined and fixed position at a distance from the periphery of the tread (5) of the tyre,
and while the tyre (2) is set in rotation, in particular uniform rotation, the distances (a₁) between the belt assembly (4) and the sensor (8) are measured and recorded, **characterized**
**in that** an inductive sensor (8) is used as the sensor (8), wherein the distances (a₁) between the belt assembly (4) and the inductive sensor (8) are measured and recorded over at least one complete revolution of the tyre (2), wherein a further sensor (9), for example a triangulation sensor, a laser scan micrometre or another scan micrometre, which is positioned in particular in a positionally accurate manner with respect to the inductive sensor (8), is used to measure and record the distances (a₂) to the tread surface over the at least one complete revolution, wherein the tread thickness and its variation over the circumference of the tyre are determined from the distance data from the further sensor (9) and the inductive sensor (8).

2. Method according to Claim 1, **characterized in that** the inductive sensor (8) is positioned at a distance of a few millimetres, in particular from 5.00 mm to 15.00 mm, from the tread periphery of the tyre (2).

3. Method according to Claim 1 or 2, **characterized in that** a vulcanized tyre (2) is mounted on a rim, is subjected to an internal pressure and is then positioned on the device that can used to set the tyre (2) in rotational motion, in particular uniform rotational motion, about the tyre axis (a).

4. Method according to one of Claims 1 to 3, **characterized in that** the device that is used to set a vulcanized tyre (2) mounted on a rim in rotational motion, in particular uniform rotational motion, is an imbalance measuring machine or a tyre uniformity measuring machine.

5. Method according to Claim 1 or 2, **characterized in that**, in the case of a green tyre, the device that is used to set the tyre in rotational motion, in particular uniform rotational motion, is a cambering machine - the second stage of a two-stage tyre building machine - on which the green tyre is located after completion of its building process.

6. Method according to one of Claims 1 to 5, **characterized in that**, in the case of a fully vulcanized tyre, the elements of the profiling of the tread are computationally filtered out.

7. Measuring arrangement (7) for indirectly measuring deviations of the bead core to bead core length of the carcass (6) of a green tyre (2) or of a vulcanized tyre with a carcass (6) containing textile strength members and with a belt assembly (4) reinforced with steel strength members, wherein the measuring arrangement (7) comprises a device, on which the tyre (2) has been or is positioned and which can be used to set the tyre in rotational motion, in particular uniform rotational motion, about the tyre axis (a), and
at least one sensor (8) which can be positioned in a defined and fixed position at a distance from the periphery of the tread of the tyre (2) and, during a rotation of the tyre (2), measures its distances (a₁) to the belt assembly (4),
**characterized by**
an inductive sensor (8) which measures the distances (a₁) to the belt assembly (4) during the rotation of the tyre, and
a further sensor (9), for example a triangulation sensor, a laser scan micrometre or another scan micrometre, wherein the further sensor (9) can be positioned in particular in a positionally accurate manner with respect to the inductive sensor (8) and, during a rotation of the tyre, measures the distances (a₂) to the tread surface.

8. Measuring arrangement (7) according to Claim 7, **characterized in that** a vulcanized tyre (2) is mounted on a rim (1) and is subjected to an internal pressure.

9. Measuring arrangement (7) according to Claim 8, **characterized in that** the device is an imbalance measuring machine or a tyre uniformity measuring machine.

10. Measuring arrangement (7) according to Claim 7, **characterized in that** a green tyre is located on a cambering machine - the second stage of a two-stage tyre building machine.

11. Measuring arrangement according to one of Claims 1 to 10, **characterized in that** a computer filters out the elements of the profiling of the tread (5).

## Revendications

1. Procédé pour mesurer indirectement des écarts dans la longueur de tringle de talon à tringle de talon d'une carcasse (6), contenant des éléments de renforcement textiles, d'un pneu (2) cru ou d'un pneu vulcanisé avec un paquet de ceinture (4) renforcé avec des éléments de renforcement en acier et une bande de roulement (5), le pneu étant positionné sur un dispositif, au moyen duquel le pneu peut être amené en rotation, en particulier uniforme, autour de l'axe (a) de pneu, au moins un capteur (8) étant positionné dans une position définie et fixe à une certaine distance avant la périphérie de la bande de roulement (5) du pneu,
et, pendant que le pneu (2) est amené en rotation en particulier uniforme, les distances (a₁) du paquet de ceinture (4) par rapport au capteur (8) étant mesurées et enregistrées,
**caractérisé en ce**
**qu'**un capteur inductif (8) est utilisé comme capteur (8), les distances (a₁) entre le paquet de ceinture (4) et le capteur inductif (8) étant mesurées et enregistrées sur au moins une révolution complète du pneu (2), un autre capteur (9), par exemple un capteur de triangulation, d'un micromètre à balayage laser ou d'un autre micromètre à balayage, qui est positionné en particulier avec précision par rapport au capteur inductif (8), permet de mesurer et d'enregistrer sur l'au moins une révolution complète les distances (a₂) par rapport à la surface de bande de roulement, l'épaisseur de bande de roulement et sa fluctuation sur la périphérie du pneu étant déterminées à partir des données de distance de l'autre capteur (9) et du capteur inductif (8).

2. Procédé selon la revendication 1, **caractérisé en ce que** le capteur inductif (8) est positionné à une distance de quelques millimètres, en particulier de 5,00 mm à 15,00 mm, devant la périphérie de bande de roulement du pneu (2).

3. Procédé selon la revendication 1 ou 2, **caractérisé en ce qu'**un pneu (2) vulcanisé est monté sur une jante, est mis sous pression interne puis est positionné sur le dispositif, au moyen duquel le pneu (2) peut être amené en rotation, en particulier uniforme, autour de l'axe (a) de pneu.

4. Procédé selon l'une des revendications 1 à 3, **caractérisé en ce que** le dispositif, au moyen duquel un pneu (2) vulcanisé et monté sur une jante est amené en rotation, en particulier uniforme, est une machine de mesure de balourd ou une machine de mesure d'uniformité de pneu.

5. Procédé selon la revendication 1 ou 2, **caractérisé en ce que**, dans le cas d'un pneu cru, le dispositif, au moyen duquel le pneu est amené en rotation, en particulier uniformément, est une machine de bombage - la deuxième étape d'une machine de confection de pneu à deux étapes -, sur laquelle se trouve le pneu cru après la fin de son processus de confection.

6. Procédé selon l'une des revendications 1 à 5, **caractérisé en ce que**, dans le cas d'un pneumatique totalement vulcanisé, les éléments du profilage de la bande de roulement sont filtrés par calcul.

7. Ensemble de mesure (7) pour mesurer indirectement des écarts dans la longueur de tringle de talon à tringle de talon de la carcasse (6) d'un pneu (2) cru ou d'un pneu vulcanisé avec une carcasse (6) contenant des éléments de renforcement textiles et un paquet de ceinture (4) renforcé avec des éléments de renforcement en acier, l'ensemble de mesure (7) comprenant un dispositif, sur lequel le pneu (2) est positionné et au moyen duquel le pneu peut être amené en rotation en particulier uniforme autour de l'axe (a) de pneu, et
au moins un capteur (8), qui peut être positionné dans une position définie et fixe à une certaine distance devant la périphérie de la bande de roulement du pneu (2) et qui mesure ses distances (a₁) par rapport à au paquet de ceinture (4) pendant une rotation du pneu (2),
**caractérisé par**
un capteur inductif (8), qui mesure les distances (a₁) par rapport au paquet de ceinture (4) pendant la rotation du pneu, et
un autre capteur (9), par exemple un capteur de triangulation, un micromètre à balayage laser ou un autre micromètre à balayage, l'autre capteur (9) pouvant être positionné en particulier avec précision par rapport au capteur inductif (8) et mesurant les distances (a₂) par rapport à la surface de bande de roulement lors d'une rotation du pneu.

8. Ensemble de mesure (7) selon la revendication 7, **caractérisé en ce qu'**un pneu (2) vulcanisé est monté sur une jante (1) et est soumis à une pression interne.

9. Ensemble de mesure (7) selon la revendication 8, **caractérisé en ce que** le dispositif est une machine de mesure de balourd ou une machine de mesure d'uniformité de pneu.

10. Ensemble de mesure (7) selon la revendication 7, **caractérisé en ce qu'**un pneu cru se trouve sur une machine de bombage - la deuxième étape d'une machine de confection de pneu à deux étapes.

11. Ensemble de mesure selon l'une des revendications 1 à 10, **caractérisé en ce qu'**un ordinateur filtre les éléments du profilage de la bande de roulement (5).
